(19) Europäisches Patentamt / European Patent Office / Office européen des brevets

(11) **EP 3 565 916 B1**

(12) **EUROPEAN PATENT SPECIFICATION**

(45) Date of publication and mention
of the grant of the patent:
**16.12.2020   Bulletin 2020/51**

(21) Application number: **18700976.6**

(22) Date of filing: **04.01.2018**

(51) Int Cl.:
*C25B 11/04* (2006.01)          *C25B 1/10* (2006.01)
*C25B 9/08* (2006.01)          *C25B 9/16* (2006.01)

(86) International application number:
**PCT/EP2018/050208**

(87) International publication number:
**WO 2018/127536 (12.07.2018 Gazette 2018/28)**

(54) **SELF-ASSEMBLING AND SELF-HEALING NANOPARTICLE-BASED CATALYST FILMS FOR ALKALINE ELECTROLYSERS**

SELBSTANORDNENDE UND SELBSTHEILENDE NANOPARTIKELBASIERTE KATALYSATORFILME FÜR ALKALISCHE ELEKTROLYSEURE

FILMS DE CATALYSEUR À BASE DE NANOPARTICULES À AUTO-ASSEMBLAGE ET AUTO-CICATRISATION POUR ÉLECTROLYSEURS ALCALINS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority:  **06.01.2017   EP 17150558**

(43) Date of publication of application:
**13.11.2019   Bulletin 2019/46**

(73) Proprietor: **Ruhr-Universität Bochum**
**44801 Bochum (DE)**

(72) Inventors:
  • **VENTOSA, Edgar**
    **28935 Mostoles, Madrid (ES)**
  • **BARWE, Stefan**
    **44809 Bochum (DE)**
  • **SCHUHMANN, Wolfgang**
    **44799 Bochum (DE)**
  • **MASA, Justus**
    **44789 Bochum (DE)**

  • **ANDRONESCU, Corina**
    **44803 Bochum (DE)**

(74) Representative: **dompatent von Kreisler Selting Werner -**
**Partnerschaft von Patent- und Rechtsanwälten mbB**
**Deichmannhaus am Dom**
**Bahnhofsvorplatz 1**
**50667 Köln (DE)**

(56) References cited:
**DE-A1-102014 226 464     US-A1- 2008 280 172**
**US-A1- 2009 145 772**

  • **DI TANG ET AL: "Carbon Quantum Dot/NiFe Layered Double-Hydroxide Composite as a Highly Efficient Electrocatalyst for Water Oxidation", ACS APPLIED MATERIALS AND INTERFACES, vol. 6, no. 10, 28 May 2014 (2014-05-28), pages 7918-7925, XP055374973, US ISSN: 1944-8244, DOI: 10.1021/am501256x cited in the application**

EP 3 565 916 B1

Printed by Jouve, 75001 PARIS (FR)

**Description**

The invention provides self-assembling and self-healing nanoparticle-based catalyst films that can be formed on the electrodes of alkaline electrolysers. Notably, provided is an electrocatalytic device comprising an electrolytic cell divided into anode and cathode chambers by an exchange membrane, said anode and cathode chambers being provided with electrodes immersed in electrolytic suspensions, wherein the electrolytic suspensions comprise surface charged catalytic particles forming self-healing films on the electrodes, and the use of the device as electrolyser, preferably for electrolysis of water.

**Background of the Invention**

The energy production from renewable sources faces a major challenge, its intermittency. New efficient energy conversion and storage pathways will pave the way for the ongoing change from fossil fuel-based to renewable energy production (Dincer, I.; Renew. Sust. Energ. Rev. 4:157-175 (2000)). Storage of surplus electrical energy in the form of chemical bonds, especially hydrogen, is an attractive solution to level out fluctuations in energy production (Editorial. Hydrogen on the rise. Nat. Energy 1:16127 (2016)). The stored energy can then be recovered by oxidation of hydrogen in fuel cells when needed (Chu, S. & Majumdar, A.; Nature 488:294-303 (2012)). Electrochemical water splitting that consists of reduction and oxidation of water in separate compartments is a promising method for the conversion of electrical energy into hydrogen (Du, P. & Eisenberg, R.; Energy Environ. Sci. 5:6012-6021 (2012)). The overpotential that is necessary to drive the hydrogen evolution reaction (HER) and the oxygen evolution reaction (OER) at cathode and anode, respectively, makes the use of efficient electrocatalysts indispensable. Therefore, enormous efforts are currently devoted to the development of highly active catalysts for both reactions (Galán-Mascarós, J. R.; ChemElectroChem 2:37-50 (2015), Jiang, J. et al., J. Power Sources 278:445-451 (2015), McCrory, C. C. L. et al.; J. Am. Chem. Soc. 135: 16977-16987 (2013), Zou, X. et al.; J. Am. Chem. Soc. 135: 17242-17245 (2013), Hu, W.-H. et al.; Carbon 100: 236-242 (2016), Dai, X. et al.; ACS Appl. Mater. Interfaces 8: 6439-6448 (2016), Masa, J. et al.; Adv. Energy Mater. 6:1502313(1 (2016), Konkena, B. et al.; Nat Comms 7:12269 (2016), Ng, J. W. D. et al.; Nat. Energy 1:16053 (2016)). Highly active materials often undergo structural changes during electrochemical reactions leading to instable forms of the initial material (Lutterman, D. A. et al.; J. Am. Chem. Soc. 131:3838-3839 (2009)). Hence, intrinsic stability of the catalyst as well as stability of the catalyst film (attachment of the catalytic material onto the current collector) are as important as catalytic activity for the envisaged technical application of catalysts, especially under the harsh electrolysis conditions. There are two general approaches of preparing catalyst films. I) Direct growth of catalysts on current collectors by electroless (Jiang, J. et al., J. Power Sources 278:445-451 (2015)) and electrochemical (Pintado, S. et al.; J. Am. Chem. Soc. 135:13270-13273 (2013), Mousty, C. & Walcarius, A.; J. Solid State Electrochem. 19:1905-1931 (2015)) methods as well as vapor deposition methods (Peng, Q. et al.; J. Vac. Sci. Technol. A 30:10803 (2012), Pickrahn, K. L. et al.; Adv. Energy Mater. 2:1269-1277 (2012)). And II) immobilization of a pre-synthesized catalyst powder (Geng, J. et al.; ChemSusChem 8:659-664 (2015), Di Tang et al.; ACS Appl. Mater. Interfaces 6:7918-7925 (2014)). Whereas the former may results in more stable catalyst films, the latter offers the possibility of exploring an immense number of powders of tuneable properties, particle sizes and shapes. Unfortunately, it is very challenging to immobilize catalyst powders, e.g. nanoparticles, on gas-evolving electrodes. Drop-coating is a widely used methodology for forming catalyst films from catalyst powder. This technique is based on the application of a suspension that contains catalytic particles and binder agent on the surface of a current collector. Evaporation of the solvent leads to formation of the catalyst film. However, films prepared by this method are not entirely stable under the harsh conditions of gas-evolving reactions resulting in catalyst detachment. In addition, the presence of binders in the catalyst film can interfere decreasing the initial activity of the catalyst (Wang, L. et al.; ACS applied materials & interfaces 8:16736-16743 (2016), Lu, X. & Zhao, C.; Nat. Commun. 6:6616 (2015)). Thus, despite the increasing number of highly active catalyst powders reported for electrochemical water splitting, immobilization of powder onto the gas-evolving electrodes of electrolysers remains a challenge.

In CN-A-105714326 a suspension solution electrocatalytic device is described, the electrolytic cell of which is divided into anode and cathode chambers by a proton exchange matrix, said anode and cathode chambers comprising an anode sidewall and a cathode bottom, respectively, and said cathode chamber being provided with a microsphere suspension such as a molybdenum carbid gravity microspheres that intermittently touch the cathode material US 2008/280172 A1 and US 2009/145772 A1 disclose further electrochemical cells. DE 10 2014 226464 A1 discloses catalytic particles.

**Short Description of the Invention**

An innovative approach for the preparation of nanoparticle-based catalyst films for alkaline electrolysers was found. Instead of modifying the electrodes prior to assembly of the electrolyser, catalyst films are formed while the system is running. Pre-synthesised catalytic particles are directly added into the electrolyte reservoirs of an electrolyser forming catalyst/electrolyte suspensions. Pumping the suspensions through the running electrolyser leads to the formation of self-assembling catalyst films driven by electrostatics based immobilization of particles. The electrostatic interaction requires that the surfaces of electrode and particle are oppositely charged, e.g. particles with surfaces positively and negatively charged are immobilized at cathode and anode, respectively. Importantly, self-assembled catalyst films possess self-healing properties as long as particles are present in the electrolyte, which is a unique feature of this preparation technique. The proof-of-concept was demonstrated in a non-zero gap alkaline electrolyser using state-of-the-art catalyst powders, NiFe LDH and $Ni_xB$ for anode and cathode, respectively. Catalyst films remained stable for at least three weeks at current densities ranging between 50 - 100 $mA/cm^2$. The invention thus provides

(1) an electrocatalytic device comprising an electrolytic cell divided into anode and cathode chambers= by an exchange membrane, said anode and cathode chambers being provided with electrodes, wherein one or both of said electrodes

(a) is/are immersed in electrolytic suspensions, said electrolytic suspensions comprising surface-charged catalytic particles capable of forming, by electrostatic forces, self-assembling and self-healing films on the electrodes, and capable of forming suspensions, said suspensions being suitable of being pumped through the electrolytic cell, and/or
(b) has/have self-assembling and self-healing films formed thereon, by electrostatic forces, from electrolytic suspensions comprising surface-charged catalytic particles, wherein

(i) negatively surface-charged particles of said electrolytic suspensions are capable of being immobilized and forming a film on the surface of the positively charged electrode, such as an electrolyser anode, and/or the positively charged electrode, such as an electrolyser anode, has self-healing films formed thereon from negatively surface-charged particles of said electrolytic suspensions; and/or
(ii) positively surface-charged particles of said electrolytic suspensions are capable of being immobilized and forming a film on the surface of the negatively charged electrode, such as an electrolyser cathode, and/or the negatively charged electrode, such as an electrolyser cathode, has self-healing films formed thereon from positively surface-charged particles of said electrolytic suspensions;

(2) a method for preparing the device of aspect (1) comprising an electrolytic cell divided into anode and cathode chambers by an exchange membrane, said anode and cathode chambers being provided with electrodes, wherein the method comprises immersing said electrodes in electrolytic suspensions comprising surface-charged catalytic particles; and
(3) the use of the device of aspect (1) as electrolyser, including for electrolysis of water.

**Short description of the Figures**

Figure 1: Electrochemical and visual evidence of the formation of self-assembling catalyst films. Drop in the cell voltage ($U_{cell}$) observed in a Ni//Ni electrolyser operating at $I_{appl}$= 50 $mA/cm^2$ after addition of catalyst powder into the electrolyte (3 M KOH) for (a) NiFe LDH, (b) CoMn LDH, (c) $Ni_xB$ and (d) $Co_xP$. Insets in the graphs are photographs of the corresponding electrode after disassembling the electrolyser. Concentration of the catalyst was about 1.3 mg/ml.

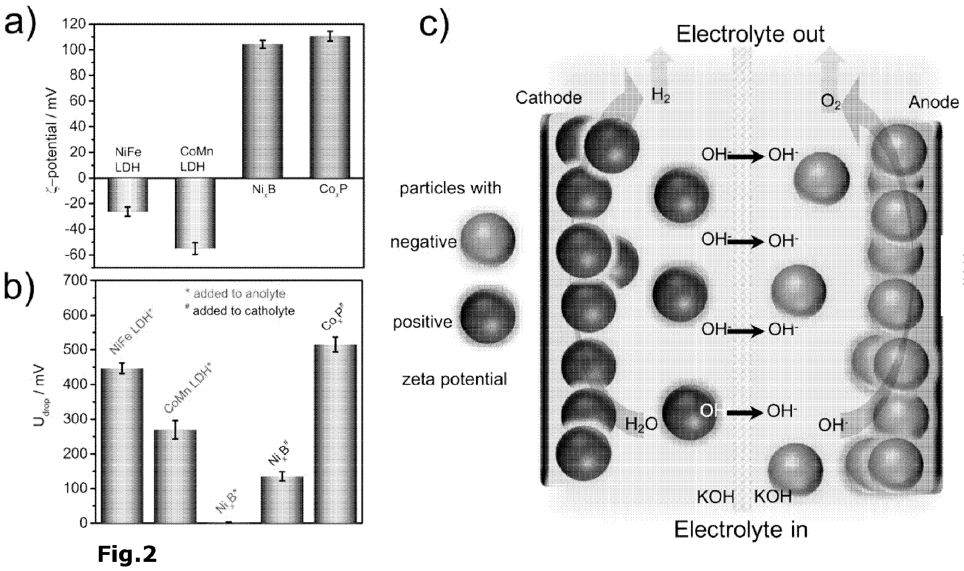

Figure 2: Electrostatic nature of the formation of self-assembling catalyst films (a) Zeta potential of NiFe LDH, CoMn LDH, $Ni_xB$ and $Co_xP$ in 3 M KOH (N = 3 for each one). (b) Drop in the voltage cell after addition of NiFe (anode) LDH, CoMn LDH (anode), $Ni_xB$ (cathode) and $Co_xP$ (cathode) into the electrolyte (3 M KOH) (N= 3 for each one). The applied current density and final concentration of catalyst were 50 $mA/cm^2$ and about 1.3 mg/ml, respectively. (c) Schematic representation of an alkaline electrolyser with self-assembled catalyst films in the presence of suspended catalysts in the electrolyte.

Figure 3: SEM images of the various catalyst films formed by self-assembling process. Cross-section SEM micrographs of (a) NiFe LDH (anode), (b) CoMn LDH (anode), (c) $Ni_xB$ (cathode) and (d) $Co_xP$ (cathode) films on Ni current collectors.

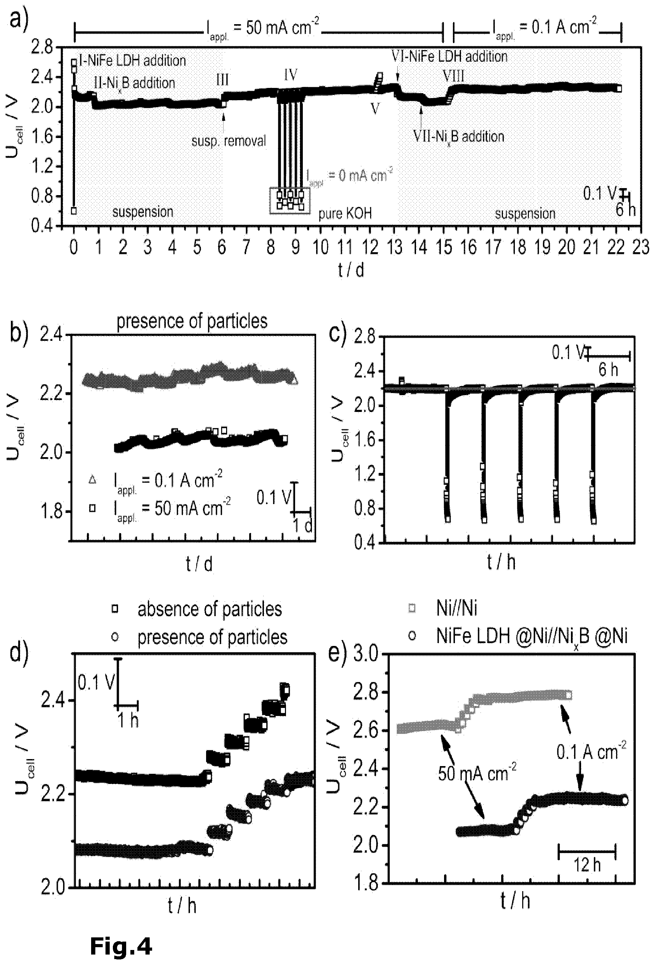

Figure 4: Operation of a self-assembled NiFe LDH@Ni//$Ni_xB$@Ni electrolyser. (a) Evolution of the cell voltage over time (3 M KOH, room temperature) at current densities of 50 $mA/cm^2$ and 0.1 $A/cm^2$ in the presence (grey background) and absence (white background) of suspended particles. Mark I and II indicate the addition of NiFe LDH and $Ni_xB$ in the anolyte and catholyte reservoirs, respectively. Mark III shows the replacement of suspension by fresh catalyst-free electrolyte. Mark IV and V shows current interruptions during operation (I = 0 $mA/cm^2$) and current steps in catalyst-free electrolyte, respectively. Mark VI and VII indicate the second addition of catalyst powders. And Mark VIII shows current steps in the presence of catalyst in the electrolyte (b) Cell voltage of the self-assembled NiFe LDH@Ni//Ni$_x$B@Ni electrolyser at 50 mA/cm$^2$ (squares) and 0.1 A/cm$^2$ (triangles) over a period of several days. (c) Current interruptions in a catalyst-free electrolyte. (d) Cell voltage in the presence (circles) and absence (squares) of suspended particles at various current densities (50 mA/cm$^2$ to 0.1 A/cm$^2$ in steps of 10 mA/cm$^2$). (e) Comparison between the cell voltage of a Ni$_{anode}$//Ni$_{cathode}$ alkaline electrolyser (squares) and a self-assembled NiFe LDH @ Ni$_{anode}$//Ni$_x$B @ Ni$_{cathode}$ electrolyser (circles) at 50 mA/cm$^2$ and 0.1 A/cm$^2$ (current steps of 10 mA/cm$^2$ in between). The concentration of catalyst powder in the suspension was about 1.3 mg/ml.

Figure 5: Schematic representation of the different stages during the formation of self-assembled catalyst film and the corresponding cell voltage. (1) Catalyst-free electrolyte solution and corresponding cell voltage. (2) Addition of catalyst powder into the electrolyte leading to the formation of self-assembled catalyst film and a drop in cell voltage. (3) Self-healing process of catalyst film, and associated constant cell voltage. (4) Detachment of particles from the catalyst film in the absence of particle in the electrolyte, and resulting increase in cell voltage.

Figure 6: Schematic representation of the setup of the electrolyser used in the Examples.

Figure 7: Photographs of the assembled electrolyser.

Figure 8: Evolution of the cell voltage over time after addition of 1.3 mg/ml (squares) and 2.67 mg/ml (circles) NiFe LDH into the anolyte (3 M KOH) of a Ni//Ni alkaline electrolyser (I$_{appl.}$ = 50 mA/cm$^2$).

Figure 9: Evolution of the cell voltage over time for Ni//Ni electrolyser at 50 mA/cm$^2$. Two additions of Ni$_x$B in the anolyte reservoir are indicated with arrows. The cell voltage did not decrease upon addition of this catalyst in the anolyte which indicates that Ni$_x$B film does not self-assemble on the anode.

Figure 10: Schematic representation of the bulk electrochemical cell with three-electrode configuration used for the immobilization of suspended particle by applying pzc$_{Ni}$ ± 200 mV.

Figure 11. Linear sweep voltammograms (3 M KOH, 5 mV/s, per surface area of 0.196 cm$^2$) for (a) OER and (b) HER of electrodes modified with catalyst films immobilized using a three-electrode cell. Bare Ni foil (blue), NiFe LDH @ Ni (black), CoMn LDH @ Ni (red), Ni$_x$B @ Ni (green) and Co$_x$P @ Ni (pink) and the optical images of the corresponding electrodes.

Figure 12: Linear sweep voltammograms (3 M KOH, 5 mV/s, per surface area of 0.126 cm$^2$) for (a) OER and (b) HER of electrodes modified with catalyst films that were prepared using an electrolyser. (Blue) Bare Ni foil, (black) NiFe LDH@Ni, (red)CoMn LDH@Ni, (green) Ni$_x$B@Ni and (pink) Co$_x$P@Ni.

Figure 13: Photographs of the self-assembled NiFe LDH and Ni$_x$B films before and after LSV measurements. The circle indicates the area where the electrochemical cell was placed for LSV. The catalyst films lost material during LSV measurements.

Figure 14: Theoretical corrosion rate of the anode Ni foil current collector at an applied current density of 50 mA/cm$^2$ for various Faradaic efficiencies. The graph shows the corrosion depth over the time at which the current is applied. The vertical green lines indicate the time needed until the whole Ni foil (thickness = 100 μm) is corroded for Faradaic efficiencies of (squares) 98 %, (circles) 99 % and (triangles) 99.5 %.

Figure 15: Comparison of cell voltage in (circle) Ni//Ni electrolyser (without suspension), (triangle) NiFe LDH @Ni//Ni$_x$B@Ni electrolyser (in the presence of particles in the electrolyte) and (square) NiFe LDH @Ni//Co$_x$P@Ni electrolyser (in the presence of particles in the electrolyte) operating at 0.1 A/cm$^2$ at room temperature.

Figure 16: XRD pattern of the as-prepared NiFe LDH.

Figure 17: XRD pattern of the as-prepared CoMn LDH.

Figure 18: XRD pattern of the as-prepared Ni$_x$B (Ni$_x$B-300).

Figure 19: XRD pattern of the as-prepared Co$_x$P.

## Detailed Description of the Invention

The aspect (1) of the invention provides for an electrocatalytic device as defined hereinbefore. Said electrocatalytic device comprises an electrolytic cell divided into anode and cathode chambers by an exchange membrane, said anode and cathode chambers being provided with electrodes, wherein one or both of said electrodes are immersed in electrolytic suspensions, and wherein the electrolytic suspensions comprise surface-charged catalytic particles forming self-assembling and self-healing films on the electrodes.

The surface-charged catalytic particles are directly added into the electrolyte reservoirs of the device and form suspensions that are pumped through the cell. The surface-charged catalytic particles may be micro- or nanoparticles having a diameter from 1 nm to 1000 nm, and/or may have a shape of 0-dimensions (including quantum dots), 1-dimension (including nanowire), 2-dimensions (including nanosheet), or 3-dimensions (including nano- to micro-particles).

The negatively surface-charged particles are immobilized and forming a film on the surface of the positively charged electrode, such as an electrolyser anode, and the positively surface-charged particles are immobilized and forming a film on the surface of the negatively charged electrode, such as an electrolyser cathode, driven by electrostatic forces. In particular, a hydrogen evolution reaction (HER) catalysts that possess positively charged surfaces, including transition metal borides, phosphides, sulphides and selenides which contain at least one metal or a mixture of metals (including $CO_2B$, $CO_xP$ and $Ni_xB$), form films on the surface of the negatively charged electrode. Furthermore, oxygen evolution reaction (OER) catalysts that possess negatively charged surfaces, including transition metal oxides, hydroxides and oxyhydroxide which contain at least one metal or a mixture of metals, form films on the surface of the positively charged electrode. In a particular example, NiFe LDH particles and $Ni_xB$ particles are immobilized and form films on the electrolyser anode and cathode, respectively. It is to be noted that the films formed on the electrodes possess self-healing properties and remained stable for at least three weeks at current densities ranging between 50 - 100 mA/cm$^2$.

In a further preferred embodiment of aspect (1) of the invention, the device is an electrolyser that possesses electrodes made from Ni, Ti, stainless steel and/or carbon, in the form of foil, foam, felt, cloth and mesh. It is preferred that in such electrolyser the cell further comprises gas outlets, such as oxygen and hydrogen outlets.

The aspect (2) of the invention provides for a method for preparing the the device of aspect (1) as defined hereinbefore. In a preferred embodiment of aspect (2) of the invention, the surface-charged catalytic particles are directly added into electrolyte reservoirs of the device and form suspensions that are pumped through the electrolytic cell.

The aspect (3) of the invention provides for the use of the device of aspect (1) as defined hereinbefore as electrolyser. In a preferred embodiment of aspect (3) of the invention, the device is used for the electrolysis of water. In a particularly preferred embodiment the device is used for the electrolysis of aqueous alkaline solutions.

The invention is explained in more detail in the following discussion.

Formation of self-assembling catalyst films: From electrochemistry of single nanoparticle collision events, it is known that catalytic particles suspended in solution can follow two types of behaviours: hit-and-run and hit-and-stand (Wang, W. & Tao, N.; Anal. Chem. 86:2-14 (2014)). While the former is the basis of recent electrochemical flowing devices such as semi solid flow batteries and electrochemical flow capacitors (Hatzell, K. B. et al.; Chem. Soc. Rev. 44:8664-8687 (2015), Hatzell, K. B. et al.; Electrochim. Acta 111:888-897 (2013)), the latter offers the possibility of modifying electrode surfaces. Liu et al. made use of the hit-and-stand behaviour to immobilize nanoparticles from a suspension onto a transparent electrode for electrochromic applications (Liu, L. et al.; J. Mater. Chem. A 2:16224-16229 (2014)).

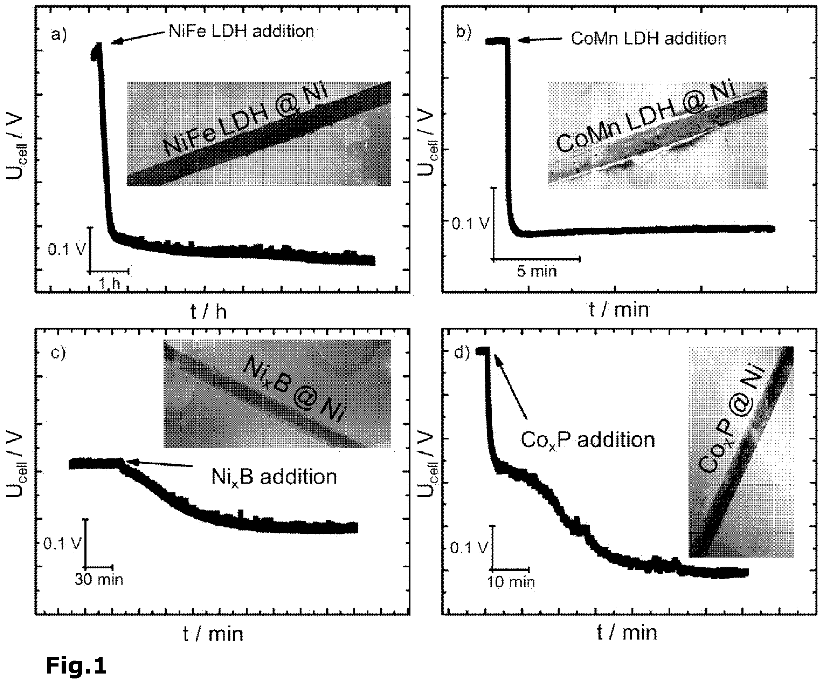

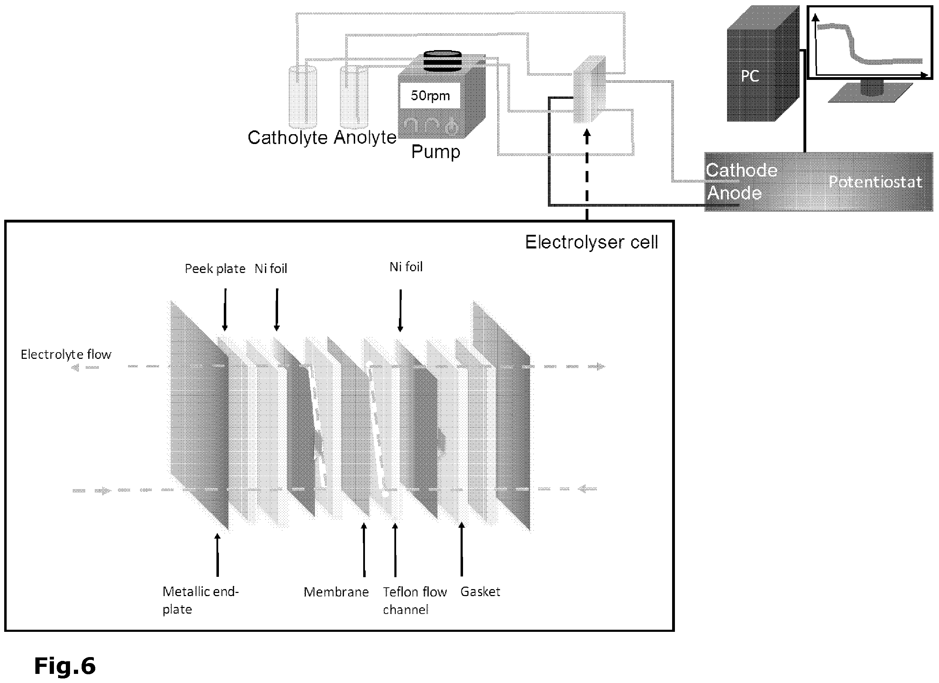

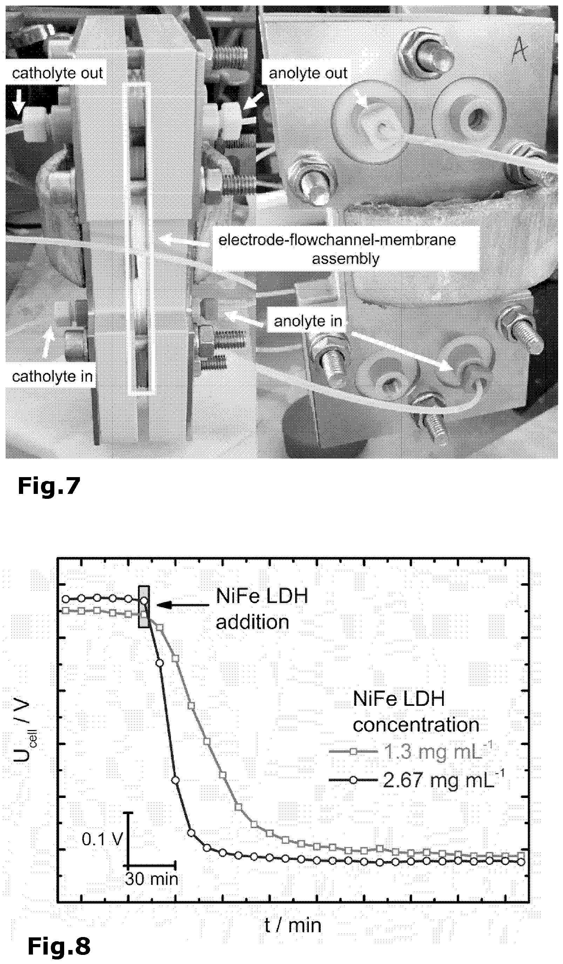

We propose the immobilization of catalytic particles suspended in electrolyte solution to form catalyst films on both electrodes of electrolysers. This concept can be easily tested by adding catalytic particles in the electrolyte reservoir of an already assembled non-zero gap electrolyser (see Methods and Fig 6 and 7). Ni was chosen as model electrode material for both cathode and anode because it is often used in commercial alkaline electrolyser systems (Holladay, J. D. et al.; Catal. Today 139:244-260 (2009)). The formation of self-assembling catalyst films was separately evaluated for four highly active catalyst powders: NiFe layered double hydroxide (Song, F. & Hu, X.; Nat. Commun. 5:4477 (2014)) (LDH) and CoMn LDH (Song, F. & Hu, X.; J. Am. Chem. Soc. 136:16481-16484 (2014)) for the anode, and $Ni_xB$ (Liang, Y. et al.; Nanotechnology 27 (2016)) and $Co_xP$ (Masa, J. et al.; ACS Energy Lett., 1192-1198 (2016)) for the cathode. The successful formation of catalyst films was confirmed (Figure 1) in real-time by the drop in cell voltage immediately after the addition of the catalytic particles in the electrolyte reservoir and ex-situ by direct visual inspection of the electrodes after disassembling the electrolyser.

It should be noted that a constant concentration of catalytic particles in suspension of 1.3 mg/ml was used in this work. Interestingly, higher concentrations, i.e. 2.6 mg/ml, did not result in more active catalyst films since the drop in cell voltage was the same (Fig. 8 and example 2). On the other hand, the steady state in cell voltage was reached in a shorter time for higher concentration, which indicates faster formation of the self-assembling catalyst film.

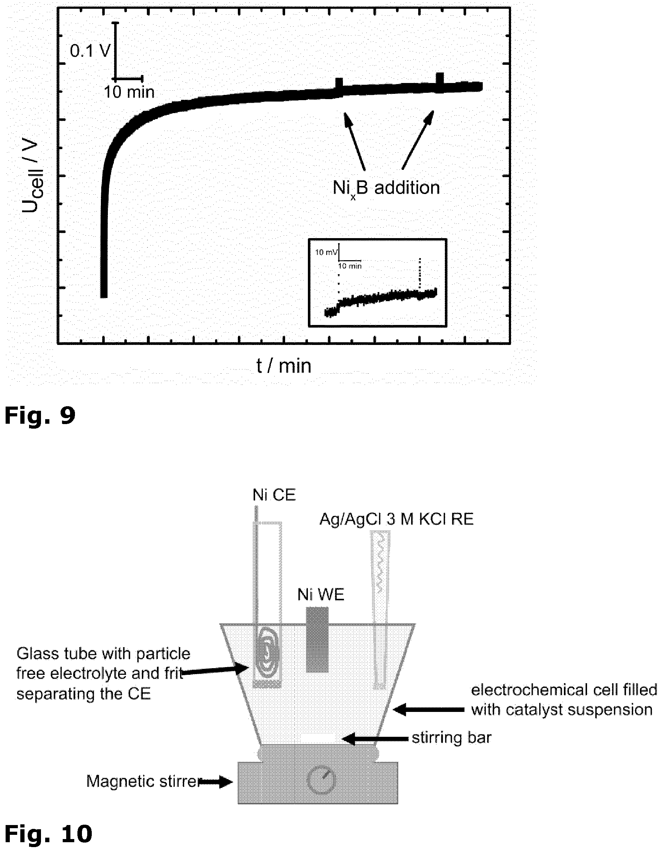

In the study of single nanoparticle collision events, the surface charge was suggested to play an important role in the nature of sticking interaction between suspended particle and electrode (Xiao, X. et al.; J. Am. Chem. Soc. 130:16669-16677 (2008)). The surface charge of the tested materials was determined by zeta potential measurements, which revealed that the surface of NiFe LDH and CoMn LDH was negatively charged, while the surface of $Ni_xB$ and $Co_xP$ was positively charged in the used electrolyte (3 M KOH) as shown in Figure 2a. Considering that the surface of anode and cathode is positively and negatively polarized, respectively, with respect to the potential of zero charge of the electrode (+80 mV vs. Ag/AgCl 3 M KCl in the case of a Ni electrode in alkaline media (McCafferty, E.; Electrochim. Acta 55:1630-1637 (2010), Kang, J. et al.; Corros. Sci. 50:3576-3580 (2008)), the immobilization of NiFe LDH and CoMn LDH on the anode and $Ni_xB$ and $Co_xP$ on the cathode and the associated drop in cell voltage (Figure 1a-d) can be explained on the basis of electrostatic interaction between particle and electrode surface. To proof this hypothesis, $Ni_xB$ that is an extremely active catalyst for HER and OER (Liang, Y. et al.; Nanotechnology 27 (2016)) was added to the catholyte and anolyte compartment. A clear drop in cell voltage was only observed when $Ni_xB$ was added to the catholyte (Figures 2b), whereas no change in cell voltage was observed when $Ni_xB$ was added to the anolyte (Figure 9). Direct visual inspection of the anode after disassembling the electrolyser confirmed the absence of $Ni_xB$ films. Additionally, three-electrode configuration measurements (Example 4) support electrostatic nature of the formation of self-assembling catalysts films. The mechanism of the formation of self-assembling catalyst films on the electrodes of an electrolyser is illustrated in Figure 2c.

Characterisation of electrodes modified with self-assembled catalyst films:

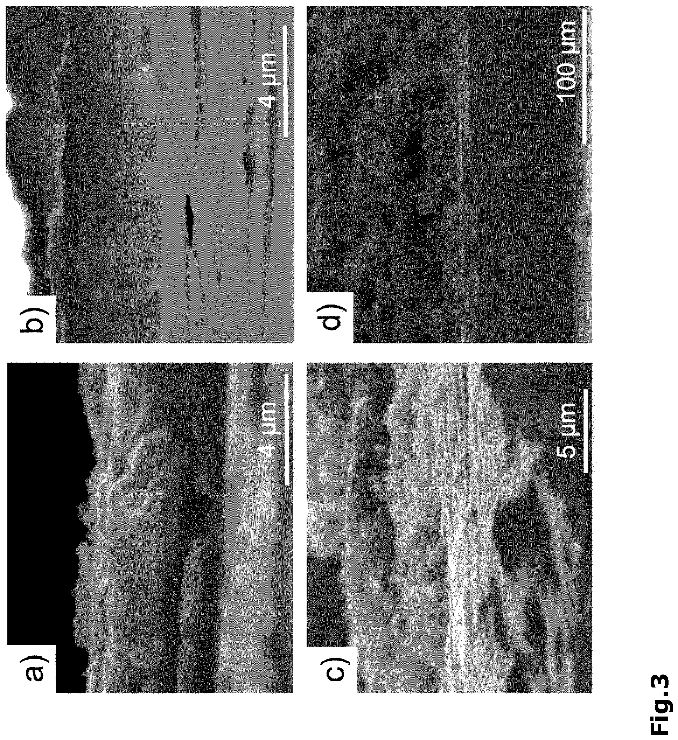

After formation of the catalyst films by adding catalyst powder in the electrolyte reservoirs, the electrolysers were disassembled and the modified electrodes were characterized. As discussed above, direct visual inspection of the electrodes revealed the formation of a film along the area defined by the electrolyte flow channel (Figure 1). Scanning electron microscopy (SEM) images confirmed the formation of catalyst films (Figure 3). Cross-section SEM images showed that the films were composed of aggregates of particles and had a thickness of several micrometres.

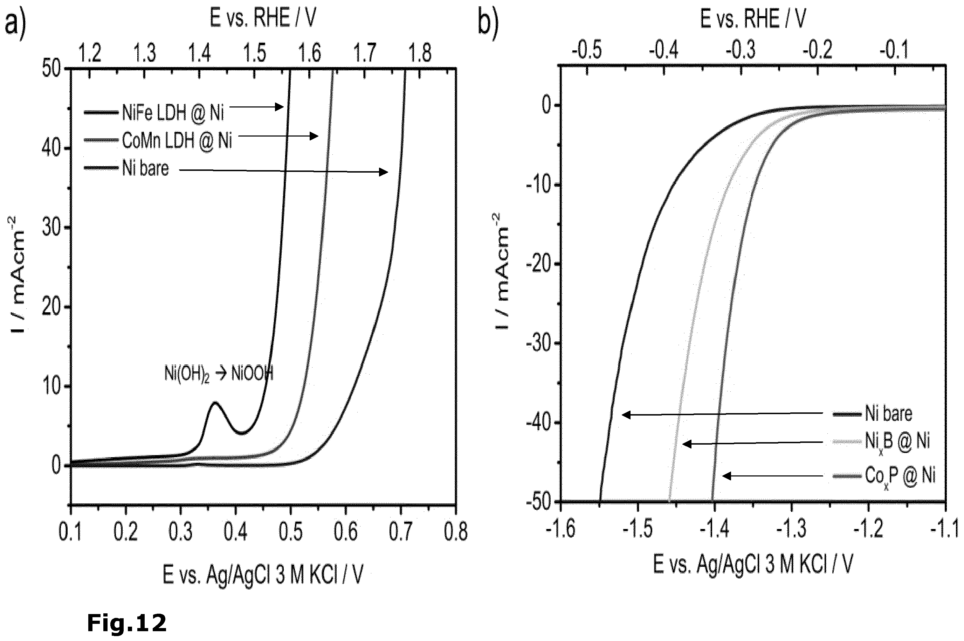

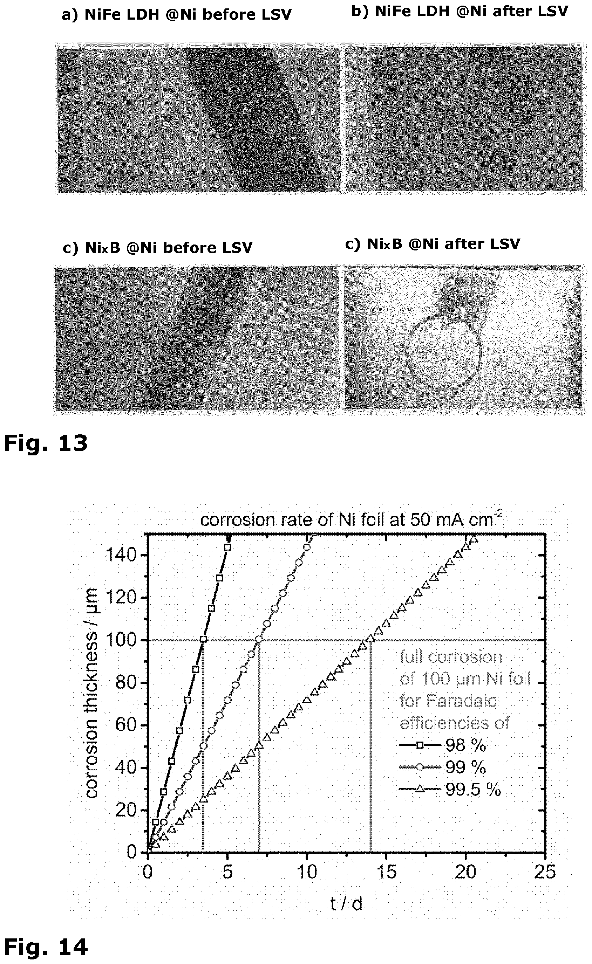

The electrochemical activity of the catalyst films towards either HER or OER was investigated in a three-electrode configuration (Example 5, Fig 12). The activity of the different catalyst films, determined by linear sweep voltammetry (LSV), was in good accordance with the trend observed in the electrolysers: activity of NiFe LDH > CoMn LDH > Ni and $Co_xP$ > $Ni_xB$ > Ni. Interestingly, visual inspection of the electrodes after electrochemical evaluation in a three-electrode configuration revealed a clear loss of catalyst from the films (Fig 13). This indicates a weak particle - electrode interaction due to electrostatic forces rather than covalent bonds. Hence, the presence of particles in the electrolyte of the electrolyser might induce a self-healing process that would be highly beneficial for long term operation.

Operation of a self-assembled catalyst film based electrolyser: The proof-of-concept for an electrolyser based on the formation of self-assembling catalyst films was demonstrated using NiFe LDH and $Ni_xB$ as catalysts for OER and HER, respectively. A home-made, non-zero gap, alkaline electrolyser operating at room-temperature and using Ni electrodes for both anode and cathode was employed as model system. As described above, catalyst powders were directly added to the electrolyte reservoirs during operation of the electrolyser. Figure 4a shows the evolution of the cell voltage ($U_{cell}$) over 22 days. $U_{cell}$ drops 450 mV and 120 mV, marked in Fig. 4a as I and II, upon addition of NiFe LDH and $Ni_xB$, respectively. After addition of both catalysts, $U_{cell}$ reached a steady state at about 2.0 V over five days. The small fluctuations of $U_{cell}$ around this value were due to changes in the pH of the catholyte, which was manually controlled (no maintenance during nights).

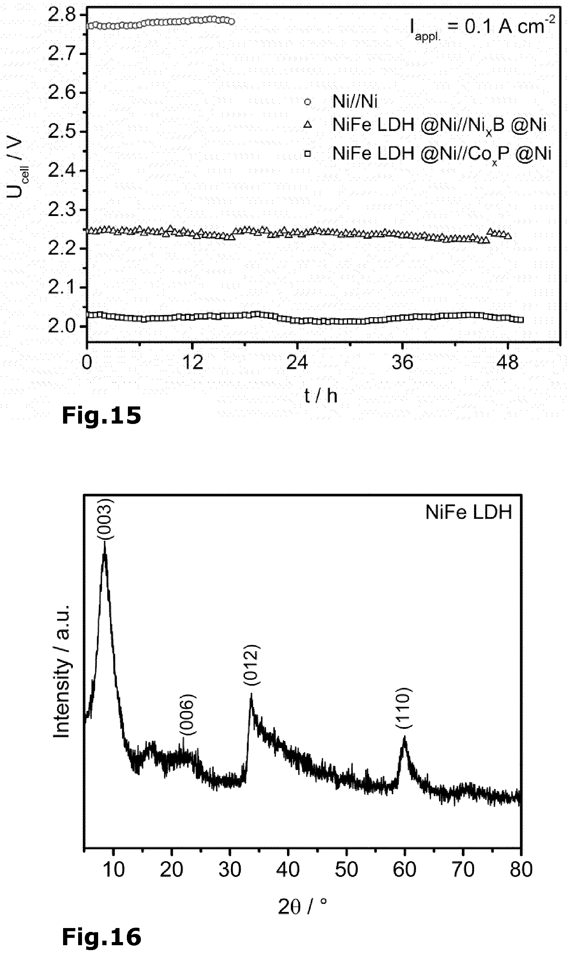

In the previous section, the presence of particles in the electrolyte after formation of the catalyst film was speculated to induce a self-healing process. Mark III in Figure 4a indicates the moment when the electrolyte suspension was replaced by fresh particle-free electrolyte. Immediately, $U_{cell}$ increased about 70 mV and kept increasing slowly (a slope of 18 mV per day)) over a period of 7 days (between mark III and VI in Fig 4a). Note that the electrolyte was periodically replaced over this period to remove particles released from the film. This confirms that the presence of particles in the suspension induces a self-healing process: when some particles detached, others that were suspended in the electrolyte immobilized replacing the detached ones. On the other hand, the catalyst films were not washed away immediately in the absence of suspended particles. Even when the current was interrupted which is of high importance for practical applications, the catalyst films were not severely deteriorated since $U_{cell}$ did not increase significantly (Figure 4 c and mark IV in Fig 4a). After operating for 7 days in the absence of suspended particles, catalyst powders were again added to the electrolyte reservoirs. Mark VI and VII indicate the drop in $U_{cell}$ associated with this second addition of NiFe LDH and $Ni_xB$ (130 and 60 mV, respectively). This decrease in $U_{cell}$ confirms the self-healing process that occurs in the presence of catalyst in the electrolyte. Figure 4d shows the differences in $U_{cell}$ in the presence and absence of suspended particles at various current densities showing the clear benefit of having particles in the electrolyte. In the last 7 days of test, the current density was maintained at 0.1 A cm$^{-2}$ in the presence of particles and $U_{cell}$ remained at about 2.25 V over the entire period of time. Overall, the electrolyser operated for 22 days over which time the catalyst films remained active ($U_{cell}$ of an electrolyser without catalyst films is displayed in Figure 4e for comparison). The three weeks test allows us to rule out major corrosion issue. The calculated corrosion rate of the anode current collector revealed that the Faradaic efficiency of the anode was above 99.5 % (see Examples, Section 5). This value is not surprising since Ni current collectors are used in commercial electrolysers due to its high corrosion resistance in alkaline media (Holladay, J. D. et al.; Catal. Today 139:244-260 (2009)). The cell voltage of the electrolyser was improved by employing a more active catalyst film for HER. A stable cell voltage of 2.05 V over 48 hours was obtained at 0.1 A/cm$^2$ when using NiFe LDH and $Co_xP$ on the anode and cathode, respectively (Fig 16). This value represents an improvement of 200 mV and 750 mV versus NiFe LDH@Ni//$Ni_xB$@Ni and Ni//Ni electrolysers, respectively. Further improvements are expected by optimizing the engineering of the system since the proof-of-concept was demonstrated using a home-made non-zero gap electrolyser operating at room temperature.

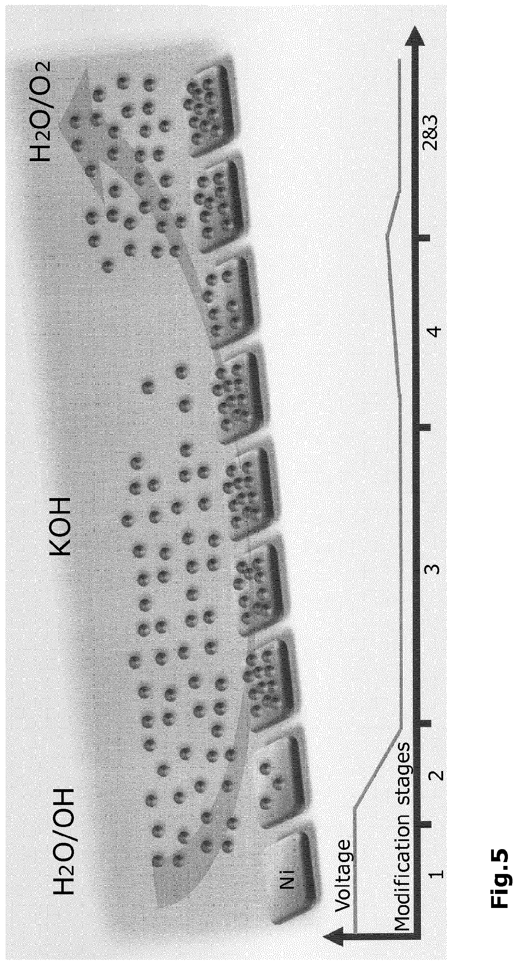

The different stages during the formation of self-assembled catalyst films are illustrated in Figure 5. In stage 1, $U_{cell}$ is defined by the HER and OER activity of the initial $Ni_{anode}$//$Ni_{cathode}$ electrolyser at a constant current density. In stage 2, the catalyst powder is added into the electrolyte forming a suspension that is pumped through the cell. Driven by electrostatic interaction, catalytic particles from suspension self-assemble on the electrode surface forming the catalyst film. $U_{cell}$ drops as the catalyst films are been formed (stage 2) until it reaches a steady state. In the stage 3, $U_{cell}$ remains at constant value as long as particles are present in the electrolyte enabled by the self-healing process of the catalyst film. When a particle detaches from the electrode surface, another that is suspended in the electrolyte instantaneously replaces the detached one. Stage 4 occurs when the suspension is replaced by particle-free electrolyte losing the self-healing feature. Catalytic particles are slowly removed from the catalyst film leading to an increase in $U_{cell}$. As in stage 2, $U_{cell}$ decreases when catalyst powder is again added to the electrolyte. And $U_{cell}$ stabilizes remaining at a constant value as long as particles are present in the electrolyte (stage 3).

Conclusion: It is demonstrated an innovative method for the formation of catalyst powder-based films on the electrodes of electrolysers. The approach allows *"operando"* modification of electrodes while the electrolyser is operating due to its self-assembling character. The catalyst powders are simply added to the electrolyte reservoirs forming a suspension that is pumped through the electrochemical cell. Based on electrostatic interaction, particles with surface negatively and positively charged are immobilized on the anode and cathode, respective, forming the catalyst film. Importantly, the presence of particles in suspension play a role even after the formation of the film since it induces a self-healing effect on the catalyst film. The proof-of-concept was achieved in a home-made non-zero gap alkaline electrolyser using state-of-the-art catalyst powders, NiFe LDH and $Ni_xB$ for anode and cathode, respectively. The catalyst films formed on the Ni electrodes of this electrolyser were stable for at least 22 days.

The invention is furthermore explained in the following Examples, which are however not to be construed as limiting the invention.

**Examples**

Material and Methods

All chemicals (analytical grade) were used without any further purification.

NiFe LDH synthesis: $Ni(NO_3)_2 \cdot 6H_2O$ (4.362 g, 15 mmol) and $Fe(NO_3)_3 \cdot 9H_2O$ (2.02 g, 5 mmol) were dissolved in decarbonated ultra pure water (100 ml) in the presence of triethanolamine (1.86 g, 12.5 mmol). Ammonium hydroxide solution (c = 25 wt.%) was added to the salts mixture under nitrogen atmosphere until a pH value of 8.5 ($\sim$ 4 ml $NH_4OH$) was reached. Afterwards the mixture was stirred for 2 h at room temperature and, then, kept in an oven at 60 °C for 14 h. The resulting mixture was filtrated and washed with decarbonated ultra pure water (500 ml). The precipitate was dried at 70 °C for 24 h. (For XRD see Figure 16).

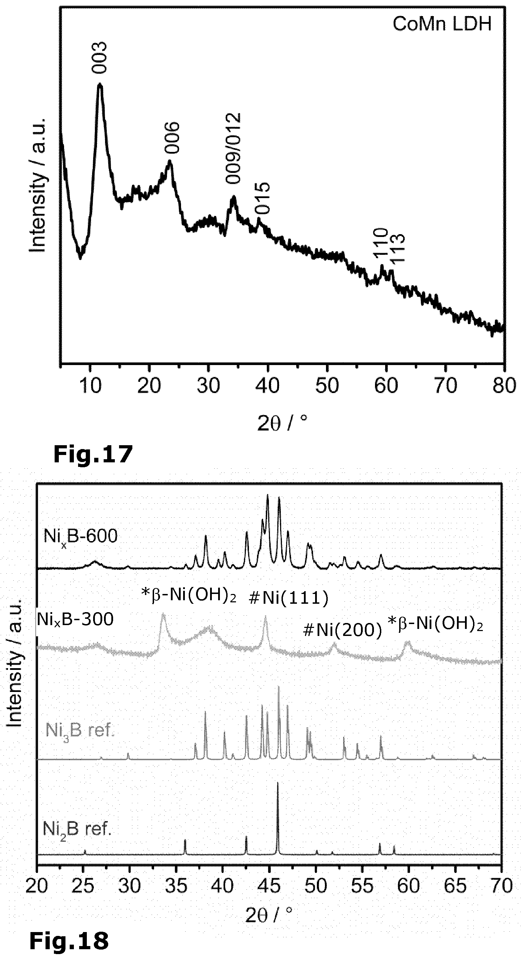

CoMn LDH synthesis: CoMn LDH was synthesised according to the procedure proposed by Song and Hu (Song, F. & Hu, X.; J. Am. Chem. Soc. 136:16481-16484 (2014)). Briefly, under $N_2$ atmosphere $Co(NO_3)_2 \cdot 6H_2O$ (1.085 g, 3.75 mmol), $Mn(NO_3)_2 \cdot 4H_2O$ (0.4705 g, 1.875 mmol), $NaNO_3$ (0.765 g, 9 mmol) and $NH_4F$ (0.925 g, 25 mmol) were dissolved in ultra pure nitrogen purged water (500 ml). After 30 min of vigorous stirring $H_2O_2$ (30 wt%, 125 $\mu$l) was added. The pH of the solution was adjusted to 10 by dropwise addition of NaOH (0.1 M, 250 ml). The final suspension was aged at room temperature for a period of 20 h. The product was isolated and washed with water and ethanol, yielding a brownish solid (For XRD see Figure 17).

$Ni_xB$ synthesis: Aqueous $NiCl_2 \cdot 6H_2O$ (20 ml, 0.5 M) in a round-bottomed Schlenk flask was deaerated by means of a Schlenk vacuum technique, flushed with argon and maintained at 0 °C using an ice-bath. $NaBH_4$ (1.0 M) in NaOH (0.1 M), separately deaerated and flushed with argon, was slowly added to the $NiCl_2 \cdot 6H_2O$ by means of a syringe. The reaction equation is given in equation (1) (Ganem, B. & Osby, J. O.; Chem. Rev. 86:763-780 (1986)).

$$2NiCl_2 + 4NaBH_4 + 9H_2O \rightarrow Ni_xB + 4NaCl + 12.5H_2 + 3B(OH)_3 \qquad (1)$$

As a precaution, vigorous frothing occurs if $NaBH_4$ solution is added rapidly to $NiCl_2 \cdot 6H_2O$. Instantaneous formation of a dark precipitate was observed. The precipitate was collected by filtration and washed with large amounts of tri-distilled water, followed by washing with ethanol. For XRD see Figure 18.

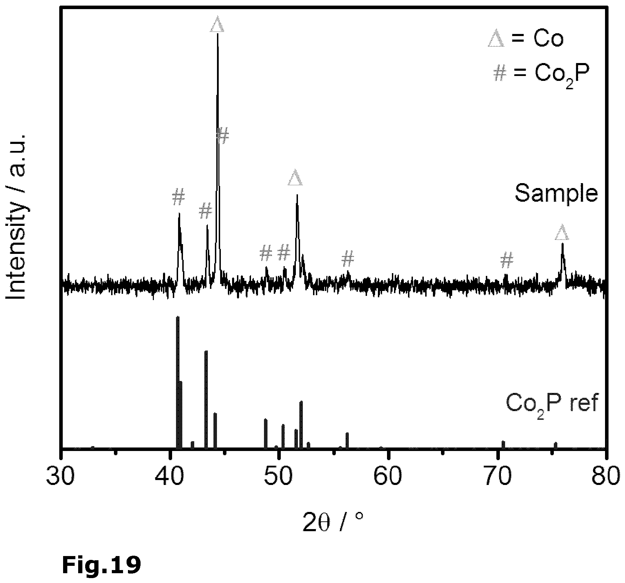

$Co_xP$ synthesis: Cobalt phosphide ($Co_xP$) was prepared by thermal decomposition of Bis(triphenylphosphine)cobalt(II)dichloride $[(C_6H_5)_3P]_2CoCl_2$, under a reductive atmosphere constituted of $H_2$ (25%) in $N_2$ at 400 °C for 2 h (Masa, J. et al.; ACS Energy Lett., 1192-1198 (2016)). For XRD see Figure 19.

Electrochemical measurements: All electrochemical measurements were conducted in alkaline media (3 M KOH) at room temperature. For the electrolyser (a home-made, non-zero gap electrolyser, see Examples, Fig 6 and Fig 7), a BioLogic VMP3 multi-channel potentiostst/galvanostat (Biologic, France) was used. Ni foil (0.1 mm thick, 99.2 % Ni and a surface area exposed to electrolyte of 4.1 $cm^2$) acted as anode and cathode. Anodic and cathodic compartments were separated by an anion exchange membrane (fumasep® FAA-3-PK-130, Fumatech). A two-channel Minipuls3 peristaltic pump (Gilson Inc., USA) was used to separately pump anolyte and catholyte through the system at a flow rate of 30 ml/min. Catalyst powders were directly added to either the anolyte or the catholyte. The concentration of catalyst in the electrolyte was about 1.3 mg/ml. The catalyst suspensions were stirred to prevent settling of the particles. The pH of the electrolyte was kept constant manually.

Linear sweep voltammetry measurements of the electrodes modified with self-assembled catalyst films were carried out in a three-electrode configuration in which the modified electrode, a commercial Ag/AgCl (3 M KCl) electrode and a piece of Ni foil acted as working electrode (WE), reference electrode (RE) and counter electrode (CE), respectively. Evaluation of activity in the three-electrode cell was conducted under static conditions at a scan rate of 5 mV/s (the uncompensated resistance was corrected afterwards) using an Autolab PGSTAT128N potentiostat/galvanostat (Metrohm Autolab B.V., Netherlands). Scanning electron microscopy (SEM): SEM images were taken using a Quanta 3D FEG scanning electron microscope (FEI, USA) operated at 20.0 kV.

Zeta potential determination: The zeta potentials of the different catalysts were measured in aqueous 3 M KOH medium using a Malvern Zetasizer Nano ZS (Malvern Instruments Ltd, UK), equipped with a He-Ne-laser with a wavelength of 633 nm, using the laser doppler micro electrophoresis.

X-ray photoelectron spectroscopy (XPS): XPS spectra were recorded using a UHV set-up equipped with a Gammadata-Scienta SES 2002 analyzer. The base pressure in the measurement chamber was 5 x 10$^{-10}$ mbar. Monochromatic Al K$\alpha$ (1486.6 eV; 14.5 kV; 30 mA) was used as incident radiation, and a pass energy of 200 eV was chosen resulting in an effective instrument resolution higher than 0.6 eV. Charging effects were compensated using a flood gun, and binding energies were calibrated based on positioning the main C 1s peak originating from carbon contaminations at 284.5 eV.

Example 1: Electrolyser system.

The setup of the home-made, non-zero gap, alkaline electrolyser used in this work is shown in Figure 6. The electrochemical cell consists of two compartments separated by an anion exchange membrane. Each compartment was composed of a metallic end plate, a peek plate, a teflon gasket, the electrode (Ni foil, thickness = 100 $\mu$m) and a teflon sealed flow channel. Both compartments were stacked together and fixed with six screws (Figure 7). The electrolyte was pumped through the cell in two separate circuits, i.e. anolyte and catholyte circuit, to prevent mixing of particles and gases.

Example 2: Dependence of the voltage drop on the particle concentration.

Addition of NiFe LDH into the anolyte (3 M KOH) of a Ni//Ni alkaline electrolyser leads to a significant drop in the measured cell voltage at an applied current density of 50 mA/cm$^2$ as it can be seen in Figure 1. Figure 8 shows the evolution of the cell voltage over time upon addition of NiFe LDH for two different concentrations of particles in suspension (1.3 and 2.67 mg/ml). The total drop in cell voltage did not increase with increasing concentration of catalyst, which indicates that the activity of the catalyst film does not improve for higher concentration. What it does change is the time needed for the formation of a self-assembling film; the higher concentration, the faster formation.

Example 3: Absence of formation of Ni$_x$B catalyst on the anode.

The electrostatic nature of the formation of self-assembling catalyst film predicts that particles with surface positively charged will not stick onto the anode. Ni$_x$B is a state-of-the-art catalyst for OER that has positive zeta potential (surface positively charged). Ni$_x$B powder was added to the anolyte reservoir while the electrolyser was operating. The formation of self-assembling catalyst films leads to a significant decrease in the cell voltage of the electrolyser as shown in Figure 1. However, the addition of Ni$_x$B in the anolyte reservoir did not change the cell voltage (see Figure 9). This indicates that catalyst film was not formed when Ni$_x$B was added to the anodic compartment supporting the electrostatic nature of the film formation. In addition, a film was not seen on the anode after disassembling the electrolyser.

Example 4: Mechanism of the formation of self-assembling catalyst films.

The mechanism of the formation of self-assembling catalyst films is based on electrostatic interaction between the surfaces of the current collector and the suspended particle. The surface charge of the electrode is dependent on the applied polarization with respect to its potential of zero charge. The potential of zero charge of Ni electrodes (pzc$_{Ni}$) in alkaline media was reported to be +80 mV vs. Ag/AgCl in 3 M KCl (Kang, J. et al., Corros. Sci. 50:3576-3580 (2008), McCafferty, E., Electrochim. Acta 55:1630-1637 (2010)). Therefore, the surface of Ni is positively and negatively charged when the electrode is polarized at higher and lower potentials than +80 mV vs. Ag/AgCl (3 M KCl), respectively. As a consequence, the anode and cathode are positively and negatively charged, respectively, during electrolysis. The surface charge of suspended particles can be determined by measuring the zeta potential. Zeta potential values of -26.3 $\pm$ 3.5 mV (NiFe LDH), -55 $\pm$ 4.5 mV (CoMn LDH), +104.3 $\pm$ 3.1 mV (Ni$_x$B) and +110.7 $\pm$ 3.8 mV (Co$_x$P) were obtained in alkaline media (3 M KOH). According to the proposed immobilization mechanism, the polarisation of the electrode with respect to its potential of zero charge (pzc) enables tuning the surface from positively to negatively charged and vice versa. As a result, the immobilization of particles with surface positively or negatively charged can be controlled, to a certain extent, by the applied potential to the electrode. Bearing in mind that pzc$_{Ni}$ is + 80 mV vs. Ag/AgCl 3 M KCl, we attempted to immobilize catalytic material using a bulk electrochemical cell (Figure 10) at a constant potential of $\pm$200 mV vs. pzc$_{Ni}$, i.e. -0.120 V and +0.280 V vs. Ag/AgCl 3 M KCl for materials with positive (Ni$_x$B and Co$_x$P) and negative

(NiFe LDH and CoMnLDH) zeta potential, respectively.

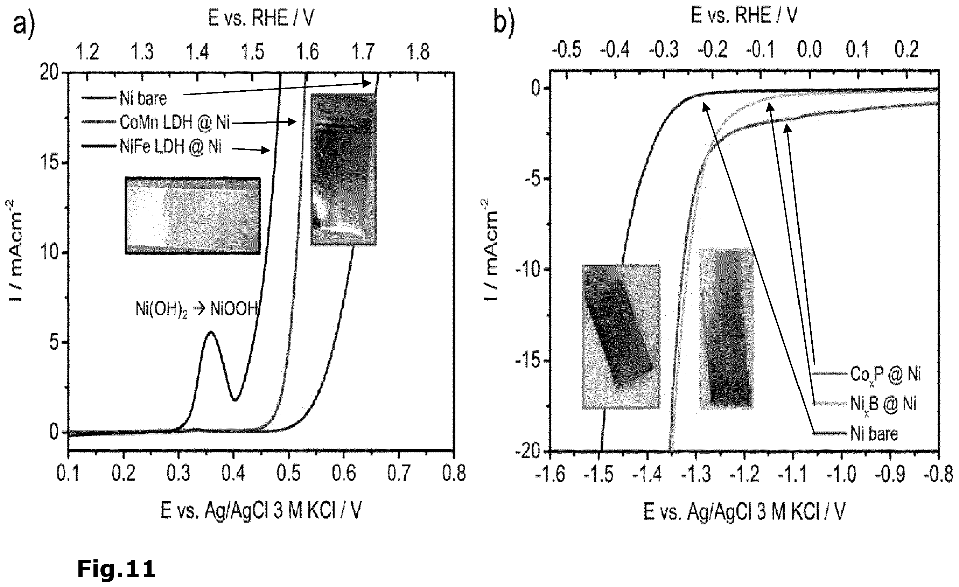

The immobilization was carried out using a three-electrode configuration where a piece of Ni foil (surface area of *ca.* 4 cm²), a piece of Ni foil in a separate compartment filled with particle free electrolyte and a Ag/AgCl (3 M KCl) electrode acted as working electrode (WE), counter electrode (CE) and reference electrode (RE), respectively. A suspension of particles (1.3 mg/ml) in 3 M KOH and particle-free 3 M KOH were used as electrolyte in the WE and CE compartments, respectively. The suspension was continuously stirred to provide a homogenous suspension during immobilization and to increase the collision frequency of particles at the electrode. The immobilization potential was applied to the WE for 60 min. After the immobilization procedure, the electrodes were taken from the suspension, and thoroughly rinsed with deionized water and then dried in air. Visual inspection of the electrodes revealed formation of films which covered the entire area immersed in the suspension (Figure 11). The catalytic activity of the modified electrodes was electrochemically investigated towards the specific reaction, either HER or OER (Figure 11). Linear sweep voltammograms (LSV) in 3 M KOH showed that the activity of all modified electrodes was higher than that of bare Ni electrode indicating the formation of a catalyst film. LSVs were recorded within the specific potential window for HER or OER at a scan rate of 5 mV/s. The potentials were corrected for uncompensated electrolyte resistance according to $E_{corr} = E - i \cdot R$. The uncompensated resistance was determined by means of electrochemical impedance spectroscopy (EIS) using an ac perturbation of 10 mV (rms) at open circuit potential in the frequency range from 100 kHz to 10 Hz.

Potentials are given against the used reference electrode (Ag/AgCl 3 M KCl) since the primary aim of LSVs is to compare the activity of catalyst films with that of bare Ni. However, the reversible hydrogen electrode (RHE) is the most commonly used reference system in electrocatalysis. Therefore, potentials were converted to the RHE scale for comparison reasons according to:

$$E_{RHE} = E_{appl} + E(Ag/AgCl\ 3\ M\ KCl) + 0.059 \bullet pH.$$

The pH of the electrolyte was calculated according to the following formula

$$pH = 14 + \log(c \bullet [OH^-]),$$

where c=activity coefficient and $[OH^-]$ is the $OH^-$ concentration.

The activity coefficient has been reported to be 1.05 for 3 M KOH at 25 °C (Hamer, W. J. & Wu, Y.-C.; J. Phys. Chem. Ref. Data 1:1047 (1972), Balej, J.; Collect. Czech. Chem. Commun. 61:1549-1562 (1996)).

Electrodes modified with catalyst films that were prepared using a three-electrode cell showed similar catalytic activity than that of electrodes modified with catalyst films that were prepared using an electrolyser (Figure 12).

Example 5: Characterisation of self-assembled catalyst films in three-electrode cell.

Electrodes modified using electrolysers (instead of three-electrode cell) were electrochemically characterized. The activity of these modified electrodes towards either HER or OER was studied using a three-electrode configuration. Figure 12 shows that the trend in the activity of modified electrodes was consistent with that observed in i) electrodes modified using a three-electrode cell and ii) the electrolyser (the corresponding cell voltage). Visual inspection of the modified electrode after evaluation in three-electrode configuration revealed the loss of catalyst material from the films (Figure 13), which indicates that interaction electrode - particle was not strong (covalent). The presence of particles suspended in the electrolyte that enables self-healing of the films is thus required for achieving long-term performance.

Example 6: Corrosion rate of the anode Ni current collector at 50 mA/cm².

In a galvanostatic measurement, the current (electrons) originate from the most favourable electrochemical reaction. In the case of the anode, the oxidation of transition metals in the collector takes place at lower potentials than OER. As a consequence, the corrosion of the current collector may simultaneously occur with OER in an electrolyser. The Faraday efficiency quantifies how much of the applied current goes to the oxidation of the current collector instead of evolution of oxygen. Faraday efficiency can thus help estimating the durability of an electrode. In our case, we have used 100 $\mu$m Ni foil as current collector. Metallic Ni can be oxidized to $Ni^{3+}$ under the anodic condition of the anode. Using the Faraday constant, molecular mass and density of Ni, we obtain that 0.835 mAh are necessary to oxidize a depth of 1 $\mu$m of an area of 1 cm (0.835 mAh/cm²$\mu$m). We can now estimate the corrosion rate of the current collector at 50 mA/cm² for different Faraday efficiencies (Figure 14). For a Faraday efficiency of 99.5 %, 0.25 mA/cm² out of 50 mA/cm² are consumed in the oxidation of the current collector leading to an oxidation rate of 3.3 h/$\mu$m. Therefore, the full depth of the current collector is oxidized within 14 days. However, our measurement lasted for 22 days, which means that the Faraday efficiency is higher than 99.5 %. This value is not surprising since Ni current collectors are used in commercial electrolysers due to its high corrosion resistance in alkaline media (Holladay, J. D. et al.; Catal. Today 139:244-260 (2009)). It should be noted that the oxidation of the catalyst itself (20 mg of NiFe LDH) takes place in 1 min at 50 mA/cm$^2$ (net current of 200 mA).

Example 7: Operation of NiFe LDH@Ni//Co$_x$P@Ni alkaline electrolyser.

A comparison of cell voltage in Ni//Ni electrolyser (without suspension), NiFe LDH @Ni//Ni$_x$B@Ni electrolyser (in the presence of particles in the electrolyte) and NiFe LDH @Ni//Co$_x$P@Ni electrolyser (in the presence of particles in the electrolyte) operating at 0.1 A/cm$^2$ at room temperature is shown in Figure 15.

Example 8: Structural characterisation of catalyst powders.

The XRD pattern of the as-prepared NiFe LDH, CoMn LDH, Ni$_x$B (Ni$_x$B-300)and Co$_x$P are shown in figures 16 to 19, respectively. For the sample used in the Ni$_x$B-300 study, broad and poorly defined peaks were obtained which is likely due to the small crystal size. The sample was annealed at higher temperature (i.e. 600 °C, Ni$_x$B-600) to increase the crystal size leading to better resolution of the peaks. The main components of Ni$_x$B were metallic Ni, $\beta$-Ni(OH)$_2$ and a mixture of Ni$_2$B and Ni$_3$B.

**Claims**

1. An electrocatalytic device comprising an electrolytic cell divided into anode and cathode chambers by an exchange membrane, said anode and cathode chambers being provided with electrodes, wherein one or both of said electrodes

   (a) is/are immersed in electrolytic suspensions, said electrolytic suspensions comprising surface-charged catalytic particles capable of forming, by electrostatic forces, self-assembling and self-healing films on the electrodes, and capable of forming suspensions, said suspensions being suitable of being pumped through the electrolytic cell, and/or
   (b) has/have self-assembling and self-healing films formed thereon, by electrostatic forces, from electrolytic suspensions comprising surface-charged catalytic particles, wherein

      (i) negatively surface-charged particles of said electrolytic suspensions are capable of being immobilized and forming a film on the surface of the positively charged electrode, such as an electrolyser anode, and/or the positively charged electrode, such as an electrolyser anode, has self-healing films formed thereon from negatively surface-charged particles of said electrolytic suspensions; and/or
      (ii) positively surface-charged particles of said electrolytic suspensions are capable of being immobilized and forming a film on the surface of the negatively charged electrode, such as an electrolyser cathode, and/or the negatively charged electrode, such as an electrolyser cathode, has self-healing films formed thereon from positively surface-charged particles of said electrolytic suspensions.

2. The device of claim 1, wherein the surface-charged catalytic particles are micro- or nanoparticles having a diameter from 1 nm to 1000 nm.

3. The device of claim 1 or 2, wherein hydrogen evolution reaction (HER) catalysts that possess positively charged surfaces, including transition metal borides, phosphides, sulphides and selenides which contain at least one metal or a mixture of metals, are capable of forming films on the surface of the negatively charged electrode, and/or the negatively charged electrode has a film of said HER catalysts formed on its surface.

4. The device of any one of claims 1 to 3, wherein oxygen evolution reaction (OER) catalysts that possess negatively charged surfaces, including transition metal oxides, hydroxides and oxyhydroxide which contain at least one metal or a mixture of metals, are capable of forming films on the surface of the positively charged electrode, and/or the positively charged electrode has a film of said OER catalysts formed on its surface.

5. The device of any one of claims 1 to 4, wherein said electrolytic suspensions comprise NiFe layered double hydroxide (LDH) particles and Ni$_x$B particles that are capable of being immobilized and forming films on the electrolyser anode and cathode, respectively.

6. The device of any one of claims 1 to 5, which is an electrolyser, and wherein the electrodes are Ni, Ti, stainless steel and carbon, in the form of foil, foam, felt, cloth and mesh.

7. The device of claim 6, wherein the cell further comprises gas outlets, such as oxygen and hydrogen outlets.

8. A method for preparing the electrocatalytic device of claim 1 comprising an electrolytic cell divided into anode and cathode chambers by an exchange membrane, said anode and cathode chambers being provided with electrodes, wherein the method comprises immersing said electrodes in electrolytic suspensions comprising surface-charged catalytic particles to form, by electrostatic forces, self-assembling and self-healing films on the electrodes.

9. The method of claim 8, wherein the device, electrolytic cell, electrolytic suspensions and/or surface-charged particles is/are as defined in claims 2 to 10.

10. The method of claim 8 or 9, wherein the surface-charged catalytic particles are directly added into electrolyte reservoirs of the device and form suspensions that are pumped through the electrolytic cell.

11. Use of the device of any one of claims 1 to 7 as electrolyser.

12. The use of claim 11, wherein the device is used for the electrolysis of water, preferably the device is used for the electrolysis of aqueous alkaline solutions.


**Patentansprüche**

1. Elektrokatalytische Vorrichtung, umfassend eine Elektrolysezelle, die durch eine Austauschmembran in eine Anoden- und eine Kathodenkammer unterteilt ist, wobei die Anoden- und die Kathodenkammer mit Elektroden versehen sind, wobei eine oder beide der Elektroden

(a) in elektrolytische Suspensionen eingetaucht ist/sind, wobei die elektrolytischen Suspensionen oberflächengeladene katalytische Teilchen umfassen, die durch elektrostatische Kräfte selbstorganisierende und selbstheilende Filme auf den Elektroden bilden können und Suspensionen bilden können, wobei die Suspensionen geeignet sind, durch die Elektrolysezelle gepumpt zu werden; und/oder
(b) selbstorganisierende und selbstheilende Filme aufweist/aufweisen, die durch elektrostatische Kräfte aus elektrolytischen Suspensionen, die oberflächengeladene katalytische Teilchen umfassen, darauf gebildet sind, wobei

(i) negativ oberflächengeladene Teilchen der elektrolytischen Suspensionen immobilisiert werden und auf der Oberfläche der positiv geladenen Elektrode, wie eine Elektrolysator-Anode, einen Film bilden können und/oder die positiv geladene Elektrode, wie eine Elektrolysator-Anode, selbstheilende Filme aufweist, die aus negativ oberflächengeladenen Teilchen der elektrolytischen Suspensionen darauf gebildet sind; und/oder
(ii) positiv oberflächengeladene Teilchen der elektrolytischen Suspensionen immobilisiert werden und auf der Oberfläche der positiv geladenen Elektrode, wie eine Elektrolysator-Kathode, einen Film bilden können und/oder die negativ geladene Elektrode, wie eine Elektrolysator-Kathode, selbstheilende Filme aufweist, die aus positiv oberflächengeladenen Teilchen der elektrolytischen Suspensionen darauf gebildet sind.

2. Vorrichtung gemäß Anspruch 1, wobei die oberflächengeladenen katalytischen Teilchen Mikro- oder Nanoteilchen mit einem Durchmesser von 1 nm bis 1000 nm sind.

3. Vorrichtung gemäß Anspruch 1 oder 2, wobei Katalysatoren der Wasserstoffentwicklungsreaktion (HER), die positiv geladene Oberflächen besitzen, einschließlich Übergangsmetallboriden, -phosphiden, -sulfiden und -seleniden, die wenigstens ein Metall oder ein Gemisch von Metallen enthalten, Filme auf der Oberfläche der negativ geladenen Elektrode bilden können und/oder die negativ geladene Elektrode einen Film der HER-Katalysatoren aufweist, die auf ihrer Oberfläche gebildet sind.

4. Vorrichtung gemäß einem der Ansprüche 1 bis 3, wobei Katalysatoren der Sauerstoffentwicklungsreaktion (OER), die negativ geladene Oberflächen besitzen, einschließlich Übergangsmetalloxiden, -hydroxiden und -oxyhydroxiden, die wenigstens ein Metall oder ein Gemisch von Metallen enthalten, Filme auf der Oberfläche der positiv geladenen Elektrode bilden können und/oder die positiv geladene Elektrode einen Film der OER-Katalysatoren aufweist, die auf ihrer Oberfläche gebildet sind.

5. Vorrichtung gemäß einem der Ansprüche 1 bis 4, wobei die elektrolytischen Suspensionen NiFe-geschichtete Doppelhydroxid(LDH)-Teilchen und $Ni_xB$-Teilchen, die immobilisiert werden und Filme auf der Elektrolysator-Anode bzw. -Kathode bilden können, umfassen.

6. Vorrichtung gemäß einem der Ansprüche 1 bis 5, bei der es sich um einen Elektrolysator handelt, wobei die Elektroden Ni, Ti, Edelstahl und Kohlenstoff in Form von Folien, Schäumen, Filzen, Flächengebilden und Gittern sind.

7. Vorrichtung gemäß Anspruch 6, wobei die Zelle weiterhin Gasauslässe, wie Sauerstoff- und Wasserstoffauslässe, umfasst.

8. Verfahren zur Herstellung der elektrokatalytischen Vorrichtung gemäß Anspruch 1, die eine Elektrolysezelle, die durch eine Austauschmembran in eine Anoden- und eine Kathodenkammer unterteilt ist, umfasst, wobei die Anoden- und die Kathodenkammer mit Elektroden versehen sind, wobei das Verfahren das Eintauchen der Elektroden in elektrolytische Suspensionen, die oberflächengeladene katalytische Teilchen umfassen, umfasst, wobei durch elektrostatische Kräfte selbstorganisierende und selbstheilende Filme auf den Elektroden entstehen.

9. Verfahren gemäß Anspruch 8, wobei die Vorrichtung, Elektrolysezelle, die elektrolytischen Suspensionen und/oder die oberflächengeladenen Teilchen wie in den Ansprüchen 2 bis 10 definiert ist/sind.

10. Verfahren gemäß Anspruch 8 oder 9, wobei die oberflächengeladenen katalytischen Teilchen direkt in Elektrolytreservoirs der Vorrichtung gegeben werden und Suspensionen bilden, die durch die Elektrolysezelle gepumpt werden.

11. Verwendung der Vorrichtung gemäß einem der Ansprüche 1 bis 7 als Elektrolysator.

12. Verwendung gemäß Anspruch 11, wobei die Vorrichtung für die Elektrolyse von Wasser verwendet wird, wobei vorzugsweise die Vorrichtung für die Elektrolyse von wässrigen alkalischen Lösungen verwendet wird.


**Revendications**

1. Dispositif électrocatalytique comprenant une cellule électrolytique divisée en chambres anodique et cathodique par une membrane d'échange, lesdites chambres anodique et cathodique étant pourvues d'électrodes, dans lequel une desdites électrodes ou les deux

   (a) est/sont immergées dans des suspensions électrolytiques, lesdites suspensions électrolytiques comprenant des particules catalytiques chargées en surface capables de former, par des forces électrostatiques, des films à auto-assemblage et auto-réparables sur les électrodes, et capables de former des suspensions, lesdites suspensions étant appropriées pour être pompées à travers la cellule électrolytique, et/ou
   (b) a/ont des films à auto-assemblage et auto-réparables formés sur celles-ci, par des forces électrostatiques, à partir de suspensions électrolytiques comprenant des particules catalytiques chargées en surface, où

   (i) des particules chargées en surface négativement desdites suspensions électrolytiques sont capables d'être immobilisées et de former un film sur la surface de l'électrode chargée positivement, telle qu'une anode d'électrolyseur, et/ou l'électrode chargée positivement, telle qu'une anode d'électrolyseur, a des films auto-réparables formés sur celle-ci à partir de particules chargées en surface négativement desdites suspensions électrolytiques ; et/ou
   (ii) des particules chargées en surface positivement desdites suspensions électrolytiques sont capables d'être immobilisées et de former un film sur la surface de l'électrode chargée négativement, telle qu'une cathode d'électrolyseur, et/ou l'électrode chargée négativement, telle qu'une cathode d'électrolyseur, a des films auto-réparables formés sur celle-ci à partir de particules chargées en surface positivement desdites suspensions électrolytiques.

2. Dispositif de la revendication 1, dans lequel les particules catalytiques chargées en surface sont des microparticules ou des nanoparticules ayant un diamètre de 1 nm à 1 000 nm.

**3.** Dispositif de la revendication 1 ou 2, dans lequel des catalyseurs de réaction de dégagement d'hydrogène (HER) qui possèdent des surfaces chargées positivement, y compris des borures, phosphures, sulfures et séléniures de métal de transition qui contiennent au moins un métal ou un mélange de métaux, sont capables de former des films sur la surface de l'électrode chargée négativement, et/ou l'électrode chargée négativement a un film desdits catalyseurs de HER formé sur sa surface.

**4.** Dispositif de l'une quelconque des revendications 1 à 3, dans lequel des catalyseurs de réaction de dégagement d'oxygène (OER) qui possèdent des surfaces chargées négativement, y compris des oxydes, hydroxydes et oxyhydroxydes de métal de transition qui contiennent au moins un métal ou un mélange de métaux, sont capables de former des films sur la surface de l'électrode chargée positivement, et/ou l'électrode chargée positivement a un film desdits catalyseurs d'OER formé sur sa surface.

**5.** Dispositif de l'une quelconque des revendications 1 à 4, dans lequel lesdites suspensions électrolytiques comprennent des particules d'hydroxyde double couche de NiFe (LDH) et des particules de $Ni_xB$ qui sont capables d'être immobilisées et de former des films sur l'anode et la cathode de l'électrolyseur, respectivement.

**6.** Dispositif de l'une quelconque des revendications 1 à 5, qui est un électrolyseur, et dans lequel les électrodes sont en Ni, Ti, en acier inoxydable et en carbone, sous forme de feuille, de mousse, de feutre, de tissu et de maillage.

**7.** Dispositif de la revendication 6, dans lequel la cellule comprend en outre des sorties de gaz, telles que des sorties d'oxygène et d'hydrogène.

**8.** Procédé de préparation du dispositif électrocatalytique de la revendication 1 comprenant une cellule électrolytique divisée en chambres anodique et cathodique par une membrane d'échange, lesdites chambres anodique et cathodique étant pourvues d'électrodes, dans lequel le procédé comprend l'immersion desdites électrodes dans des suspensions électrolytiques comprenant des particules catalytiques chargées en surface pour former, par des forces électrostatiques, des films à auto-assemblage et auto-réparables sur les électrodes.

**9.** Procédé de la revendication 8, dans lequel le dispositif, la cellule électrolytique, les suspensions électrolytiques et/ou les particules chargées en surface est/sont tel(s)/telle(s) que défini(s)/définie(s) dans les revendications 2 à 10.

**10.** Procédé de la revendication 8 ou 9, dans lequel les particules catalytiques chargées en surface sont directement ajoutées dans les réservoirs d'électrolyte du dispositif et forment des suspensions qui sont pompées à travers la cellule électrolytique.

**11.** Utilisation du dispositif de l'une quelconque des revendications 1 à 7 comme électrolyseur.

**12.** Utilisation de la revendication 11, dans laquelle le dispositif est utilisé pour l'électrolyse d'eau, et de préférence le dispositif est utilisé pour l'électrolyse de solutions aqueuses alcalines.

**Fig.1**

Fig.2

Fig.3

**Fig.4**

**Fig.5**

EP 3 565 916 B1

Fig.6

**Fig.7**

**Fig.8**

**Fig. 9**

**Fig. 10**

Fig.11

**Fig.12**

EP 3 565 916 B1

**a) NiFe LDH @Ni before LSV**          **b) NiFe LDH @Ni after LSV**

**c) Ni$_x$B @Ni before LSV**          **c) Ni$_x$B @Ni after LSV**

## Fig. 13

## Fig. 14

**Fig.15**

**Fig.16**

**Fig.17**

**Fig.18**

**Fig.19**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- CN 105714326 A
- US 2008280172 A1
- US 2009145772 A1
- DE 102014226464 A1

### Non-patent literature cited in the description

- **DINCER, I.** *Renew. Sust. Energ. Rev.,* 2000, vol. 4, 157-175
- **EDITORIAL.** Hydrogen on the rise. *Nat. Energy,* 2016, vol. 1, 16127
- **CHU, S. ; MAJUMDAR, A.** *Nature,* 2012, vol. 488, 294-303
- **DU, P. ; EISENBERG, R.** *Energy Environ. Sci.,* 2012, vol. 5, 6012-6021
- **GALÁN-MASCARÓS, J. R.** *ChemElectroChem,* 2015, vol. 2, 37-50
- **JIANG, J. et al.** *J. Power Sources,* 2015, vol. 278, 445-451
- **MCCRORY, C. C. L. et al.** *J. Am. Chem. Soc.,* 2013, vol. 135, 16977-16987
- **ZOU, X. et al.** *J. Am. Chem. Soc.,* 2013, vol. 135, 17242-17245
- **HU, W.-H. et al.** *Carbon,* 2016, vol. 100, 236-242
- **DAI, X. et al.** *ACS Appl. Mater. Interfaces,* 2016, vol. 8, 6439-6448
- **MASA, J. et al.** *Adv. Energy Mater.,* 2016, vol. 6 (1), 1502313
- **KONKENA, B. et al.** *Nat Comms,* 2016, vol. 7, 12269
- **NG, J. W. D. et al.** *Nat. Energy,* 2016, vol. 1, 16053
- **LUTTERMAN, D. A. et al.** *J. Am. Chem. Soc.,* 2009, vol. 131, 3838-3839
- **PINTADO, S. et al.** *J. Am. Chem. Soc.,* 2013, vol. 135, 13270-13273
- **MOUSTY, C. ; WALCARIUS, A.** *J. Solid State Electrochem.,* 2015, vol. 19, 1905-1931
- **PENG, Q. et al.** *J. Vac. Sci. Technol. A,* 2012, vol. 30, 10803
- **PICKRAHN, K. L. et al.** *Adv. Energy Mater.,* 2012, vol. 2, 1269-1277
- **GENG, J. et al.** *ChemSusChem,* 2015, vol. 8, 659-664
- **DI TANG et al.** *ACS Appl. Mater. Interfaces,* 2014, vol. 6, 7918-7925
- **WANG, L. et al.** *ACS applied materials & interfaces,* 2016, vol. 8, 16736-16743
- **LU, X. ; ZHAO, C.** *Nat. Commun.,* 2015, vol. 6, 6616
- **WANG, W. ; TAO, N.** *Anal. Chem.,* 2014, vol. 86, 2-14
- **HATZELL, K. B. et al.** *Chem. Soc. Rev,* 2015, vol. 44, 8664-8687
- **HATZELL, K. B. et al.** *Electrochim. Acta,* 2013, vol. 111, 888-897
- **LIU, L. et al.** *J. Mater. Chem. A,* 2014, vol. 2, 16224-16229
- **HOLLADAY, J. D. et al.** *Catal. Today,* 2009, vol. 139, 244-260
- **SONG, F. ; HU, X.** *Nat. Commun.,* 2014, vol. 5, 4477
- **SONG, F. ; HU, X.** *J. Am. Chem. Soc.,* 2014, vol. 136, 16481-16484
- **LIANG, Y. et al.** *Nanotechnology,* 2016, vol. 27
- **MASA, J. et al.** *ACS Energy Lett,* 2016, 1192-1198
- **XIAO, X. et al.** *J. Am. Chem. Soc.,* 2008, vol. 130, 16669-16677
- **MCCAFFERTY, E.** *Electrochim. Acta,* 2010, vol. 55, 1630-1637
- **KANG, J. et al.** *Corros. Sci.,* 2008, vol. 50, 3576-3580
- **GANEM, B. ; OSBY, J. O.** *Chem. Rev.,* 1986, vol. 86, 763-780
- **MASA, J. et al.** *ACS Energy Lett.,* 2016, 1192-1198
- **HAMER, W. J. ; WU, Y.-C.** *J. Phys. Chem. Ref. Data,* 1972, vol. 1, 1047
- **BALEJ, J.** *Collect. Czech. Chem. Commun.,* 1996, vol. 61, 1549-1562